# EUROPEAN PATENT APPLICATION

(11) **EP 3 785 537 A1**
(43) Date of publication of application: **03.03.2021**
(21) Application number: 20161264.5
(22) Date of filing: 05.03.2020
(51) Int. Cl.: A01M 1/02, A01M 1/20

(54) **INSECTICIDE DISPENSING DEVICE AND METHOD**

(30) Priority: 08.03.2019 US 201962815677 P; 18.07.2019 US 201962875654 P
(71) Applicant: Hirsch, Jeremy, Eli, Hattiesburg, MS 39401 (US); Bonner, Christopher, Michael, Hattiesburg, MS 39402 (US)
(72) Inventor: Hirsch, Jeremy, Eli, Hattiesburg, MS 39401 (US); Bonner, Christopher, Michael, Hattiesburg, MS 39402 (US)
(74) Representative: Dehns

(57) **Abstract**

Insecticide dispensing devices and methods of the present technology provide for the prolonged release of insecticide for the eradication of insect populations. Insecticide dispensing devices include an attractive toxic sugar bait, and have a housing configured with at least one aperture to allow a gaseous compound to exit the internal cavity and sized to allow entry of a target insect into the internal cavity. Methods of insecticide dispensing include activating the attractive toxic sugar bait in the device, and placing the activated device in an area where insects are present.

## Description

### CROSS-REFERENCE TO RELATED APPLICATIONS

This application is based on and derives the benefit of the filing date of United States Provisional Application No. 62/815,677 filed March 8, 2019 and United States Provisional Application No. 62/875,654, filed July 18, 2019. The entire content of this application is herein incorporated by reference in its entireties.

### BRIEF SUMMARY

The present invention relates to insect eradication, and more particularly to a device and method for the dispensing insecticide.

### BRIEF DESCRIPTION OF SEVERAL VIEWS OF THE DRAWINGS

Specific examples have been chosen for purposes of illustration and description, and are shown in the accompanying drawings, forming a part of the specification.
Figure 1 illustrates one example of an insecticide distribution device of the present technology.
Figure 2 is a cross-section of the insecticide distribution device of Figure 1.
Figure 3 illustrates a second example of an insecticide distribution device of the present technology.
Figure 4 is a flow chart of a method of distributing insecticide of the present technology.
Figures 5A-5C illustrate a third example of an insecticide distribution device of the present technology.

### DETAILED DESCRIPTION

Insecticide dispensing devices and methods of the present technology provide for the prolonged release of insecticide for the eradication of insect populations.

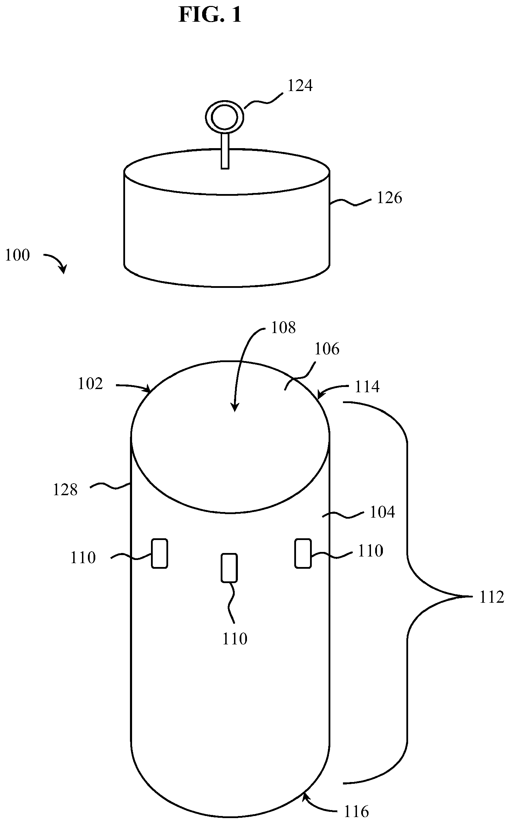

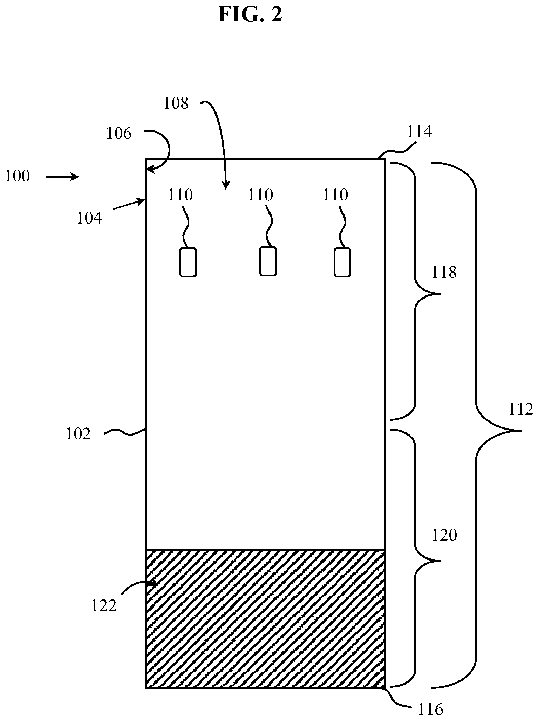

One example of an insecticide dispensing device 100 of the present technology is shown in Figures 1-2. Figure 1 is a perspective view of the device, while Figure 2 shown a cross-section thereof. The insecticide dispensing device 100 may be made of any suitable material, such as PVC or plastic. As can be seen, the insecticide dispensing device 100 includes a housing 102. The housing 102 has an outer surface 104 and an inner surface 106 that defines an internal cavity 108. The internal cavity may have any suitable volume, including a volume of at least about 450 milliliters. The device 100 also includes at least one aperture 110 in the housing that extends from the outer surface 104 to the inner surface 106 and forms a pathway from the internal cavity 108 out of the housing 102. As shown in Figure 1-2, the device 100 has a plurality of apertures 110 in the housing 102 that each extend from the outer surface 104 to the inner surface 106 and form a pathway from the internal cavity 108 out of the housing 102.

As can be seen in Figure 2, the insecticide dispensing device 100 also includes an attractive toxic sugar bait 122. The attractive toxic sugar bait includes an insecticide agent, which may be selected to be effective to kill members of the target insect population. The attractive toxic sugar bait may have any suitable formulation to be effective. In at least some examples, the attractive toxic sugar bait may be in the form of a solid. In such examples, a user may activate the attractive toxic sugar bait by adding water thereto, to form a solution. The attractive toxic sugar bait solution may undergo fermentation when activated by the water. The insecticide agent may be present in an amount from about 0.05% by weight to about 5% by weight of the attractive toxic sugar bait solution. The insecticide agent may include orthoboric acid in an amount from about 0.05% by weight to about 5% by weight of the attractive toxic sugar bait solution. As the attractive toxic sugar bait may undergoes fermentation, it may release a gaseous compound, such as carbon dioxide. In such examples, the attractive toxic sugar bait may include yeast and sugar. It may be necessary for the water added by the user to have a sufficiently warm temperature, such as at least 70°F, to activate the fermentation process. The attractive toxic sugar bait may further include additional ingredients, such as a lipid, which may promote the fermentation reaction and/or the attraction of the target insect to the bait.

One example formulation for an attractive toxic sugar bait of the present technology is:

| | |
|---|---|
| 209.4g | Sucrose |
| 17.4g | Orthoboric Acid, |
| 2.47441g | Brewer's Yeast, |
| .1mg | Thiamin, |
| .12mg | Riboflavin, |
| .8mg | Niacin, |
| .07mg | Vitamin B6, |
| 4.9mcg | Folate, |
| .02mcg | Vitamin B12, |
| .05mg | Pantothenic Acid, |
| 1.3g | Protein, |
| 2.6g | Magnesium, |
| .09mg | Iron, |
| 52mg | Potassium, |
| 5.2mg | Sodium, |
| .12mg | Zinc, |
| .08mg | Copper, |
| 5.2mcg | Selenium, |
| 1.1g | Carbohydrates, |
| .01g | Biotin, |
| .005g | Lipids |

Referring back to Figures 1-2, the housing has a vertical length 112 having a top end 114 and a bottom end 116. As can be seen in Figure 2, the device 100 has an upper portion 118 that includes the top end 114 of the length 112, and a lower portion 120 that includes a bottom end 116 of the length. The attractive toxic sugar bait 122 may be contained in the internal cavity 108, within the lower portion 120 of the housing 102. In at least some examples, each of the apertures is located in the upper portion 118 of the housing 102. However, in other examples, at least one aperture may be located in the lower portion 120 of the housing, although the at least one aperture should be located so that it does not result in leakage of the attractive toxic sugar bait from the device.

Each aperture 110 is be located in such a manner as to allow a gaseous compound, such as carbon dioxide produced by the attractive toxic sugar bait once it is activated, to exit the internal cavity 108. Each aperture 110 is also located and sized to allow a target insect to access (and consume) the attractive toxic sugared bait. In some examples, the at least one aperture 110 is sized to allow the target insect to enter into the internal cavity to access the attractive toxic sugar bait. While the insecticide dispensing devices of the present technology may be useful to dispense insecticide to various types of insects, the target insect for at least some examples may be a mosquito. In such examples, the at least one aperture 110 may have a diameter of up to about 1/4 inches, or from about 1/16 inches to about 3/16 inches. The apertures may all be the same size, or have different sizes. However, the size of each aperture should be selected to allow the mosquito to feed from the attractive toxic sugar bait in the device, while preventing other insects, such as honeybees, and animals, such as hummingbirds, to access and feed from the attractive toxic sugar bait.

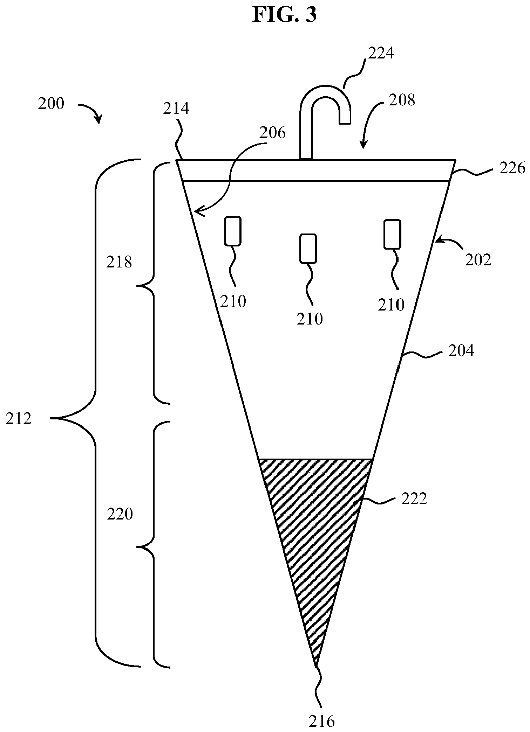

Figure 3 illustrates a second example of an insecticide dispensing devices of the present technology. The insecticide dispensing device 200 may be made of any suitable material, including plastic, and may take the form of a plastic bag. As can be seen, the insecticide dispensing device 200 includes a housing 202. The housing 202 has an outer surface 204 and an inner surface 206 that defines an internal cavity 208. The internal cavity 208 may have any suitable volume, including a volume of at least about 450 milliliters. The device 200 also includes at least one aperture 210 in the housing 202 that extends from the outer surface 204 to the inner surface 206 and forms a pathway from the internal cavity 208 out of the housing 202. As shown in Figure 3, the device 200 has a plurality of apertures 210 in the housing 202 that each extend from the outer surface 204 to the inner surface 206 and form a pathway from the internal cavity 208 out of the housing 202.

As can be seen in Figure 3, the insecticide dispensing device 200 also includes an attractive toxic sugar bait 122.

Additionally, the housing 202 has a vertical length 212 having a top end 214 and a bottom end 216. As can be seen in Figure 3, the device 200 has an upper portion 218 that includes the top end 214 of the length 212, and a lower portion 220 that includes a bottom end 216 of the length. The attractive toxic sugar bait 222 may be contained in the internal cavity 208, within the lower portion 220 of the housing 202. In at least some examples, each of the apertures is located in the upper portion 218 of the housing 202. However, in other examples, at least one aperture 210 may be located in the lower portion 220 of the housing, although the at least one aperture 210 should be located so that it does not result in leakage of the attractive toxic sugar bait from the device.

Each aperture 210 is located in such a manner as to allow a gaseous compound, such as carbon dioxide produced by the attractive toxic sugar bait once it is activated, to exit the internal cavity 208. Each aperture 210 is also located and sized to allow a target insect to access (and consume) the attractive toxic sugared bait. In some examples, the at least one aperture 210 is sized to allow the target insect to enter into the internal cavity to access the attractive toxic sugar bait. As discussed above with respect to device 100, the target insect for device 200 may be a mosquito. In such examples, the at least one aperture 210 may have a diameter of up to about 1/4 inches, or from about 1/16 inches to about 3/16 inches. The apertures may all be the same size, or have different sizes. However, the size of each aperture should be selected to allow the mosquito to feed from the attractive toxic sugar bait in the device, while preventing other insects, such as honeybees, and animals, such as hummingbirds, to access and feed from the attractive toxic sugar bait.

Insecticide dispensing devices of the present technology may include at least one mounting fixture 124, 224 attached to the housing 102, 202 and configured to allow the device to be mounted vertically or substantially vertically. Examples of suitable mounting fixtures include eyelet hook 124 (Figure 1),and hook 224 (Figure 3). Other suitable mounting fixtures include other types of hooks, support straps, hook and loop fasteners, and the like.

Insecticide dispensing devices of the present technology may include at least one resealable sealing closure, which can be opened to allow access to the internal cavity and closed to seal or reseal the device 100, 200. Examples of resealable sealing closures include cap 126 (Figure 1) and resealable adhesive strip 266 (Figure 3). Cap 126 may attach to the body 128 of the housing 102 by snap fit, friction fit, threaded closure, or any other suitable resealable closing mechanism. Other examples of suitable resealable sealing closures include ties, zipper closures, and the like. In some examples, such as a modified version of device 100, the device may include a plurality of resealable sealing closures, such as having a resealable sealing closure at each end.

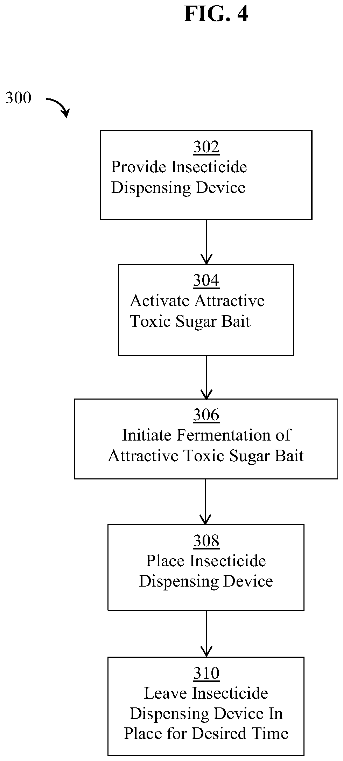

Figure 4 is a flow chart describing an example of a method 300 of dispensing insecticide of the present technology. Method 300 starts at step 302, with providing an insecticide dispensing device. The insecticide dispensing device may be an insecticide dispensing device of the present technology, as described above with respect to devices 100 and 200. Accordingly, the insecticide dispensing device may include a housing that has an outer surface and an inner surface that defines an internal cavity. The insecticide dispensing device may also include at least one aperture in the housing that extends from the outer surface to the inner surface and forms a pathway from the internal cavity out of the housing, the at least one aperture being located to allow a gaseous compound to exit the internal cavity and sized to allow entry of a target insect into the internal cavity. The insecticide dispensing device may further include an attractive toxic sugar bait including an insecticide agent, the attractive toxic sugar bait being contained within a portion of the internal cavity. Step 304 of the method 300 includes activating the attractive toxic sugar bait by adding a quantity of water to the insecticide dispensing device. In some examples, the step 304 of activating further includes step 306, which is initiating a fermentation reaction. The fermentation reaction causes the attractive toxic sugar bait to release a gaseous compound, such as carbon dioxide. In some examples, the water must be a sufficiently warm temperature, such as at least about 70°F, to activate the bait and initiate the fermentation reaction. The method 300 further includes a step 308 of placing the insecticide dispensing device in an area where insects are present. It is recommended that the insecticide dispensing device be placed in a vertical or substantially vertical orientation, to avoid leakage of the attractive toxic sugar bait from the device. The placing can include hanging the device, or mounting it on a tree, wall, or other surface. The method 300 can also include a step 310 of leaving the insecticide dispensing device in place for a desired time period, such as up to about 90 days.

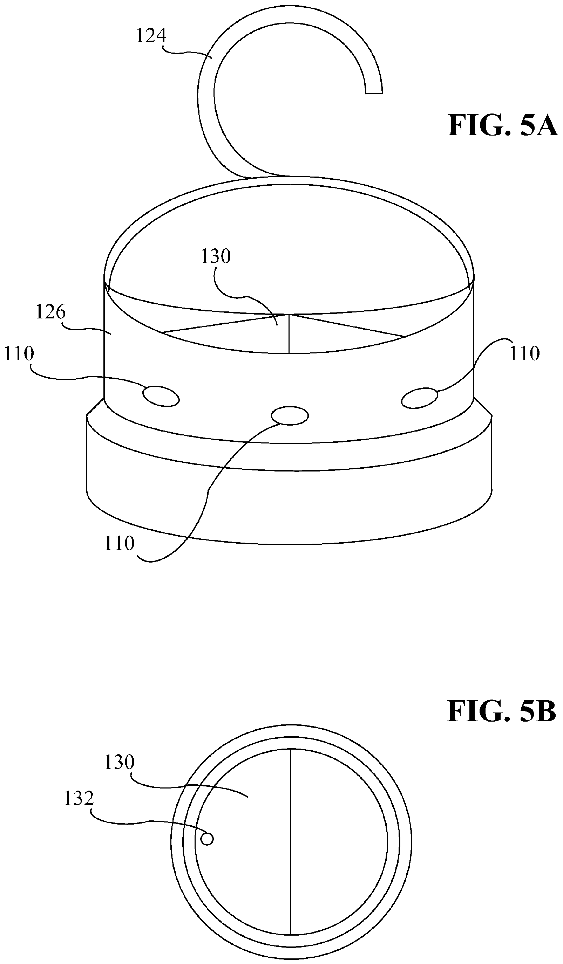

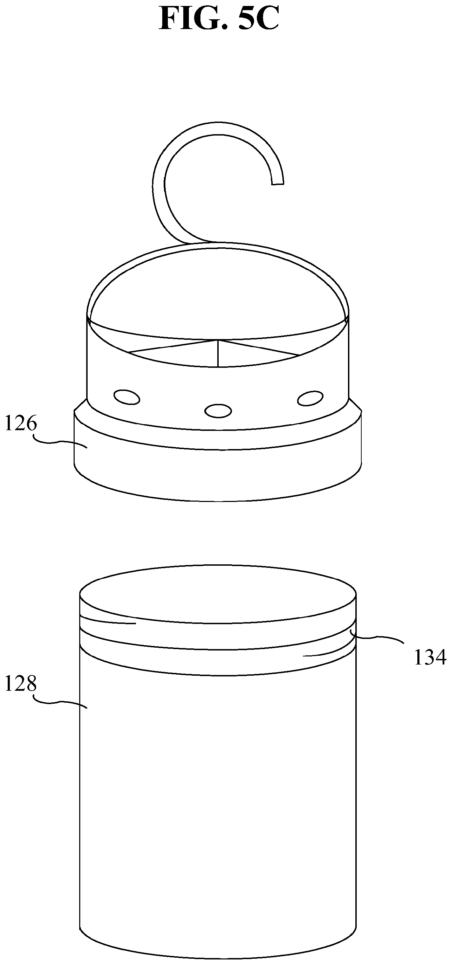

Figures 5A-5C illustrate a third example of an insecticide distribution device 100 of the present technology. This example may include at least one resealable sealing closure including cap 126 configured to attach to the body 128 of the housing 102 by snap fit, friction fit, threaded closure, or any other suitable resealable closing mechanism 134. In some embodiments, body 128 may have no apertures 110, as shown in Figure 5C. However, cap 126 of Figures 5A-5C may be fitted to bodies 128 having apertures 110, such as that shown in Figures 1 and 2.

Cap 126 of Figures 5A-5C may include one or more apertures 110. Apertures 110 may be configured similarly to those in the embodiment of Figures 1-2. For example, each aperture 110 may be located in such a manner as to allow a gaseous compound, such as carbon dioxide produced by the attractive toxic sugar bait once it is activated, to exit the internal cavity 108. Each aperture 110 is may be located and sized to allow a target insect (e.g., a mosquito) to access (and consume) the attractive toxic sugared bait. In some examples, the at least one aperture 110 may be sized to allow the target insect to enter into the internal cavity to access the attractive toxic sugar bait. In examples wherein the target insect is a mosquito, the at least one aperture 110 may have a diameter of up to about 1/4 inches, or from about 1/16 inches to about 3/16 inches. The apertures may all be the same size, or have different sizes. However, the size of each aperture may be selected to allow the mosquito to feed from the attractive toxic sugar bait in the device, while preventing other insects, such as honeybees, and animals, such as hummingbirds, to access and feed from the attractive toxic sugar bait.

Cap 126 of Figures 5A-5C may include a sloped top surface 130 with at least one drain hole 132 disposed therein. For example, sloped top surface 130 may slope towards each drain hole 132 so that each drain hole 132 is at a lower level than surrounding sloped top surface 130. Accordingly, moisture and/or other matter (e.g., atmospheric yeast and/or particulates in some cases) may flow towards drain holes 132 and may enter the internal cavity 108 through drain holes 132. For example, rain may enter drain holes 132 to moisten the attractive toxic sugar bait and thereby encourage fermentation. Cap 126 of Figures 5A-5C is illustrated with two drain holes 132 and a sloped top surface 130 that slopes downward in two directions from a central high point to the two drain holes 132 disposed at peripheries of the sloped top surface 130, but any arrangement of drain holes 132 and any shape of sloped top surface 130 that encourages water to flow into drain holes 132 may be used.

Cap 126 of Figures 5A-5C may include at least one mounting fixture 124, such as eyelet hook 124. Other suitable mounting fixtures may include other types of hooks, support straps, hook and loop fasteners, and the like. When insecticide distribution device 100 of Figures 5A-5C is mounted by mounting fixture 124, cap 126 may be positioned vertically above body 128, allowing moisture and/or other matter (e.g., atmospheric yeast and/or particulates) that enters apertures 110 to proceed downward into internal cavity 108 (e.g., to moisten the attractive toxic sugar bait).

By encouraging water to enter internal cavity 108 through drain holes 132 and/or apertures 110, cap 126 of Figures 5A-5C may prolong a length for which the attractive toxic sugar bait may be effective for eradicating target insects. For example, as described above, a user may activate the attractive toxic sugar bait by adding water into internal cavity 108. Over time, the initially-added water may evaporate, which may cause fermentation to cease. However, if water can naturally enter internal cavity 108 (e.g., as rain or dew) while insecticide distribution device 100 is deployed in an outdoor environment, the attractive toxic sugar bait may be remoistened, and fermentation may continue. In some embodiments, for example, the attractive toxic sugar bait may remain effective for 90 days while water remains inside internal cavity 108.

In some embodiments, drain holes 132 may be sufficiently large to admit rainwater or the like so that the attractive sugar bate will remain effective for an extended period of time. Drain holes 132 may not be so large as to admit other insects, such as honeybees, and animals, such as hummingbirds, and feed from the attractive toxic sugar bait, or may not be so large as to allow rainwater to flood and overflow body 128.

As will be seen from the above, in an aspect of the present disclosure, an insecticide dispensing device is provided, comprising a housing including an outer surface and an inner surface that defines an internal cavity; an attractive toxic sugar bait including an insecticide agent and sugar and formulated to undergo fermentation with exposure to water to produce a gaseous compound, the attractive toxic sugar bait being contained within a portion of the internal cavity; and a cap removably coupled to the housing, the cap including at least one aperture that extends from the outer surface to the inner surface and forms a pathway from the internal cavity out of the housing, the at least one aperture being located to allow the gaseous compound to exit the internal cavity and sized to allow a target insect to access the attractive toxic sugar bait.

In an embodiment of the device, the cap may comprise a plurality of apertures that each extend from the outer surface to the inner surface and form a pathway from the internal cavity out of the housing, each aperture being located to allow gaseous compounds to exit the internal cavity and sized to allow entry of a target insect into the internal cavity.

In an embodiment off the device, the cap further includes an upper surface including at least one drain hole.

In an embodiment of the device, the upper surface includes at least one sloped surface.

In an embodiment of the device, the at least one drain hole is disposed at a low point in the upper surface formed by the at least one sloped surface.

In an embodiment of the device, the at least one aperture has a diameter of up to about 1/4 inches.

In an embodiment of the device, the at least one aperture has a diameter from about 1/16 inches to about 3/16 inches.

In an embodiment, the device further comprises at least one mounting fixture attached to the cap and configured to allow the device to be mounted vertically or substantially vertically.

In an embodiment of the device, the cap is disposed above the housing when the device is mounted vertically or substantially vertically.

In an embodiment of the device, the attractive toxic sugar bait includes the insecticide agent in an amount from about 1% by weight to about 2% by weight of the attractive toxic sugar bait.

In an embodiment of the device, the internal cavity has a volume of at least about 450 milliliters.

In an embodiment of the device, the attractive toxic sugar bait further comprises yeast.

In an embodiment of the device, the attractive toxic sugar bait further comprises a lipid.

In an embodiment of the device, the gaseous compound comprises carbon dioxide.

In an embodiment of the device, the insecticide agent includes orthoboric acid in an amount from about 0.05% by weight to about 5% by weight.

According to another aspect of the present invention, a method of dispensing insecticide is provided, comprising steps of: providing an insecticide dispensing device, the insecticide dispensing device including: a housing including an outer surface and an inner surface that defines an internal cavity; an attractive toxic sugar bait including an insecticide agent and sugar and formulated to undergo fermentation with exposure to water to produce a gaseous compound, the attractive toxic sugar bait being contained within a portion of the internal cavity; and a cap removably coupled to the housing, the cap including at least one aperture that extends from the outer surface to the inner surface and forms a pathway from the internal cavity out of the housing, the at least one aperture being located to allow the gaseous compound to exit the internal cavity and sized to allow a target insect to access the attractive toxic sugar bait; activating the attractive toxic sugar bait by adding a quantity of water to the attractive toxic sugar bait in the device; and placing the insecticide dispensing device in a vertical or substantially vertical orientation in an area where insects are present.

In an embodiment of the method, the water has a temperature of at least about 70 °F.

In an embodiment of the method, the step of adding water to the attractive toxic sugar bait creates an attractive toxic sugar bait solution having the insecticide agent present in an amount from about 0.05% by weight to about 5% by weight of the attractive toxic sugar bait solution.

In an embodiment, the method further comprises leaving the insecticide dispensing device in place for a period of up to about 90 days.

In an embodiment of the method, the activating includes initiating a fermentation reaction that releases carbon dioxide.

In an embodiment, the method further comprises receiving additional water at the attractive toxic sugar bait in the device through at least one of the at least one aperture and at least one drain hole in an upper surface of the cap.

In an embodiment of the method, the activating includes initiating a fermentation reaction that releases carbon dioxide.

In an embodiment, the method further comprises receiving additional water at the attractive toxic sugar bait in the device through at least one of the at least one aperture and at least one drain hole in an upper surface of the cap.

In an embodiment of the method, the step of adding water to the attractive toxic sugar bait creates an attractive toxic sugar bait solution including orthoboric acid in an amount from about 0.05% by weight to about 5% by weight of the attractive toxic sugar bait solution.

From the foregoing, it will be appreciated that although specific examples have been described herein for purposes of illustration, various modifications may be made without deviating from the spirit or scope of this disclosure. It is therefore intended that the foregoing detailed description be regarded as illustrative rather than limiting, and that it be understood that it is the following claims, including all equivalents, that are intended to particularly point out and distinctly claim the claimed subject matter.

## Claims

1. An insecticide dispensing device comprising:
a housing including an outer surface and an inner surface that defines an internal cavity;
an attractive toxic sugar bait including an insecticide agent and sugar and formulated to undergo fermentation with exposure to water to produce a gaseous compound, the attractive toxic sugar bait being contained within a portion of the internal cavity; and
a cap removably coupled to the housing, the cap including at least one aperture that extends from the outer surface to the inner surface and forms a pathway from the internal cavity out of the housing, the at least one aperture being located to allow the gaseous compound to exit the internal cavity and sized to allow a target insect to access the attractive toxic sugar bait.

2. The insecticide dispensing device of claim 1, the cap comprising a plurality of apertures that each extend from the outer surface to the inner surface and form a pathway from the internal cavity out of the housing, each aperture being located to allow gaseous compounds to exit the internal cavity and sized to allow entry of a target insect into the internal cavity.

3. The insecticide dispensing device of claim 1, wherein the cap further includes an upper surface including at least one drain hole.

4. The insecticide dispensing device of claim 3, wherein the upper surface includes at least one sloped surface.

5. The insecticide dispensing device of claim 4, wherein the at least one drain hole is disposed at a low point in the upper surface formed by the at least one sloped surface.

6. The insecticide dispensing device of claim 1, wherein the at least one aperture has a diameter of up to about 1/4 inches.

7. The insecticide dispensing device of claim 1, wherein the at least one aperture has a diameter from about 1/16 inches to about 3/16 inches.

8. The insecticide dispensing device of claim 1, further comprising at least one mounting fixture attached to the cap and configured to allow the device to be mounted vertically or substantially vertically.

9. The insecticide dispensing device of claim 8, wherein the cap is disposed above the housing when the device is mounted vertically or substantially vertically.

10. The insecticide dispensing device of claim 1, wherein the attractive toxic sugar bait includes the insecticide agent in an amount from about 1% by weight to about 2% by weight of the attractive toxic sugar bait.

11. The insecticide dispensing device of claim 1, wherein the internal cavity has a volume of at least about 450 milliliters.

12. The insecticide dispensing device of claim 1, wherein the attractive toxic sugar bait further comprises yeast.

13. The insecticide dispensing device of claim 12, wherein the attractive toxic sugar bait further comprises a lipid.

14. The insecticide dispensing device of claim 12, wherein the gaseous compound comprises carbon dioxide.

15. A method of dispensing insecticide comprising steps of:
providing an insecticide dispensing device, the insecticide dispensing device including:
a housing including an outer surface and an inner surface that defines an internal cavity;
an attractive toxic sugar bait including an insecticide agent and sugar and formulated to undergo fermentation with exposure to water to produce a gaseous compound, the attractive toxic sugar bait being contained within a portion of the internal cavity; and
a cap removably coupled to the housing, the cap including at least one aperture that extends from the outer surface to the inner surface and forms a pathway from the internal cavity out of the housing, the at least one aperture being located to allow the gaseous compound to exit the internal cavity and sized to allow a target insect to access the attractive toxic sugar bait;
activating the attractive toxic sugar bait by adding a quantity of water to the attractive toxic sugar bait in the device; and
placing the insecticide dispensing device in a vertical or substantially vertical orientation in an area where insects are present.

16. The method of claim 15, wherein the water has a temperature of at least about 70 °F.

17. The method of claim 15, wherein the step of adding water to the attractive toxic sugar bait creates an attractive toxic sugar bait solution having the insecticide agent present in an amount from about 0.05% by weight to about 5% by weight of the attractive toxic sugar bait solution.

18. The method of claim 15, further comprising leaving the insecticide dispensing device in place for a period of up to about 90 days.

19. The method of claim 15, wherein the activating includes initiating a fermentation reaction that releases carbon dioxide.

20. The method of claim 15, further comprising receiving additional water at the attractive toxic sugar bait in the device through at least one of the at least one aperture and at least one drain hole in an upper surface of the cap.

21. The method of claim 16, wherein the activating includes initiating a fermentation reaction that releases carbon dioxide.

22. The method of claim 16, further comprising receiving additional water at the attractive toxic sugar bait in the device through at least one of the at least one aperture and at least one drain hole in an upper surface of the cap.

23. The insecticide dispensing device of claim 1 wherein the insecticide agent includes orthoboric acid in an amount from about 0.05% by weight to about 5% by weight.

24. The method of claim 16 wherein the step of adding water to the attractive toxic sugar bait creates an attractive toxic sugar bait solution including orthoboric acid in an amount from about 0.05% by weight to about 5% by weight of the attractive toxic sugar bait solution.
